# EUROPÄISCHE PATENTSCHRIFT

(11) **EP 0 859 134 B1**
(45) Veröffentlichungstag und Bekanntmachung des Hinweises auf die Patenterteilung: **09.04.2003**
(21) Anmeldenummer: 98100758.6
(22) Anmeldetag: 17.01.1998
(51) Int. Cl.: F01N 7/08, F16L 27/111

(54) **Gelenkiges Verbindungselement für Rohrteile**
Flexible connecting element for tubular parts
Elément de conduite flexible pour éléments tubulaires

(30) Priorität: 18.02.1997 DE 19706191
(43) Veröffentlichungstag der Anmeldung: 19.08.1998
(73) Patentinhaber: Witzenmann GmbH, 75175 Pforzheim (DE)
(72) Erfinder: Burkhardt, Carlo Dr.,, 75331 Grunbach (DE); Elsässer, Fabian, 75334 Straubenhardt (DE)
(74) Vertreter: Blumenröhr, Dietrich

(56) Entgegenhaltungen:
- EP-A- 0 657 683
- EP-A- 0 750 100
- EP-A- 0 791 731
- DE-A- 4 233 644
- DE-C- 19 548 340
- FR-A- 2 418 333
- PATENT ABSTRACTS OF JAPAN vol. 015, no. 290 (M-1139), 23.Juli 1991 & JP 03 105012 A (SANGO:KK), 1.Mai 1991,

## Beschreibung

Die Erfindung betrifft ein fluiddichtes gelenkiges Verbindungselement für Rohrteile nach dem Oberbegriff des Anspruches 1.

Derartige gelenkige Verbindungselemente werden zwischen zwei in der Regel im wesentlichen miteinander fluchtende Rohrteile von Rohrleitungen eingesetzt, um Angularbewegungen und auch Axialbewegungen zwischen den Rohrteilen zuzulassen sowie eine gegenseitige Abkopplung bezüglich der Übertragung von Schwingungen und Geräuschen zwischen den Rohrteilen zu erreichen. Ein hier besonders in Frage kommendes Anwendungsgebiet sind die Abgasleitungen von Verbrennungsmotoren bei Kraftfahrzeugen, auf die nachfolgend im wesentlichen Bezug genommen wird, ohne damit den Anwendungsbereich des Gegenstandes der Erfindung zu beschränken. Üblicherweise sind die miteinander zu verbindenden Rohrteile Glattrohre bzw. deren Enden. Genauso gut können aber hier auch Anschlußflansche in Frage kommen. Der Querschnitt der Rohrteile ist in der Regel kreisförmig und koaxial zum entsprechend ebenfalls kreisförmigen Leitungselement. Es sind jedoch auch andere Querschnitte denkbar, beispielsweise ein ovaler Querschnitt der Rohrteile mit entsprechend angepaßtem Querschnitt des Leitungselementes.

Was das flexible Leitungselement betrifft, so hat dieses im bekannten Falle die Form eines ein- oder mehrlagigen Wellrohres, Balges, dicht gewickelten Schlauches oder dergleichen, wobei sich die Materialwahl nach den gegebenen Anforderungen richtet. Bei Abgasleitungen von Kraftfahrzeugen findet hier wie auch für die übrigen Bauteile des Verbindungselementes Metall Verwendung, soweit nicht nachfolgend ausdrücklich ein anderes Material genannt ist. Im Hinblick auf das Leitungselement werden dabei besonders ringgewellte Metallschläuche bevorzugt.

Ein Verbindungselement der eingangs genannten Art ist durch die FR-A-2 418 333 bekannt. Bei diesem findet zwar ein im wesentlichen hohlzylindrisches Zwischenstück aus einem Elastomer Verwendung, das auf den genannten Stützteilen sitzt. Auf diesen Stützteilen wird jedoch das Zwischenstück durch ein alles übergreifendes und radial aufgespanntes Rohr gehalten, wodurch jegliche Beweglichkeit zwischen den miteinander verbundenen Rohrteilen verloren geht oder doch zumindest auf ein Minimum eingeschränkt ist. Außerdem ist im bekannten Falle die Verbindung zwischen Stützteilen und Zwischenstück lediglich reibschlüssig, wodurch deren Tragfähigkeit entsprechend eingeschränkt ist.

Aufgabe der Erfindung ist daher, ein Verbindungselement der eingangs genannten Art derart auszubilden, daß sich eine hohe Entkopplungswirkung hinsichtlich der Weiterleitung von Schwingungen und Geräuschen erzielen läßt bei gleichzeitig hoher Beweglichkeit des Verbindungselementes mit der Möglichkeit, deren Freiraum in weiten Grenzen einstellbar zu gestalten. Dabei soll außerdem eine gegen äußere Einflüsse wenig anfällige und damit betriebssichere Bauweise erzielt werden.

Diese Aufgabe ist erfindungsgemäß durch die kennzeichnenden Merkmale des Anspruches 1 gelöst.

Diese erfindungsgemäßen Maßnahmen haben die Wirkung, daß nunmehr die Stützteile durch ein hochflexibles Bauteil miteinander verbunden sind, das außerdem einen erheblichen inneren Dämpfungsgrad aufweist. Auf diese Weise hat die Verbindung der Stützteile eine große Beweglichkeit, die aber auf der anderen Seite leicht den jeweiligen Bedürfnissen angepaßt werden kann durch entsprechende Variation der Shore-Härte des Elastomers.

Darüber hinaus ist das erfindungsgemäße Zwischenstück auf sehr betriebssichere Weise angebracht, indem es in der genannten Weise sowohl formschlüssig als auch kraftschlüssig mit den Stützteilen verbunden ist.

Was die insbesondere bei Abgasanlagen von Kraftfahrzeugen auftretenden hohen Temperaturen betrifft, so können diese auch von dem erfindungsgemäßen Zwischenstück bestanden werden, was für Dieselfahrzeuge wegen der dort grundsätzlich niedrigeren Abgastemperaturen ohne weiteres gilt aber auch für Benzinmotoren deshalb, weil dort heutzutage verbrauchsoptimierte Motoren weniger Abwärme erzeugen und weil inzwischen temperaturoptimierte Elastomere eine hohe Dauertemperaturfestigkeit aufweisen. Gerade in diesem Zusammenhang sei verwiesen auf temperaturoptimierten Silikonkautschuk und Fluor-Silikonkautschuk, der sich besonders als Material für das erfindungsgemäße Zwischenstück als geeignet erwiesen hat.

Zur Ausgestaltung des Erfindungsgegenstandes ist es zweckmäßig, daß die Stützteile als im wesentlichen glockenförmige Rohrstücke ausgebildet sind, die mit ihrem verjüngten Hals wenigstens mittelbar auf dem diesem zugeordneten Rohrteil sitzen. Dabei kann das Zwischenstück auf die zugeordneten Enden der Stützteile aufgespritzt sein.

Eine besonders vorteilhafte Bauform besteht darin, daß das Zwischenstück als im wesentlichen hohlzylindrischer, die Enden der Stützteile umfassender Ring ausgebildet ist, wobei als Spannmittel Federringe, geschlossene Ringe, Spannbänder oder dergleichen geeignet sind.

Die so geschilderte Bauform des Stützteiles in Form eines Ringes führt zu einem nach außen rotationssymmetrisch in Erscheinung tretenden Verbindungselement, das folglich eine gegenüber dem Durchmesser des Leitungselementes nur geringe radiale Erweiterung aufweist, somit einen platzsparenden Einbau gestattet.

Für das erwähnte Zwischenstück kann vorgesehen sein, daß dieses an seinem zwischen den Enden der Stützteile sitzenden Mittelabschnitt wenigstens eine gegebenenfalls um das Leitungselement umlaufende Ausnehmung aufweist. Durch die damit gegebene Materialfortnahme ergibt sich in Axialrichtung des Leitungselementes eine besonders vergrößerte Beweglichkeit des Zwischenstückes, indem dieses nach Art eines Balges stärker gestaucht bzw. gestreckt werden kann, als dies für ein insoweit massives Zwischenstück der Fall wäre.

Für alle erwähnten Zwischenstücke kann ferner vorgesehen sein, diese durch eine eingelagerte gewebeartige Armierung zu verstärken, die z.B. aus einem Metalldraht- oder Kunstfasergewebe bestehen kann. Damit läßt sich auf die Belastbarkeit der Zwischenstücke Einfluß nehmen ggf. zugunsten deren Elastizität und damit ihres Dämpfungsverhaltens.

Um insbesondere die Schwingungsdämpfung des erfindungsgemäßen Verbindungselementes zu vergrößern, können folgende etwa im gleichen Rahmen liegende Maßnahmen ergriffen werden:

Es kann vorgesehen sein, daß der Mittelabschnitt des jeweiligen Zwischenstückes über wenigstens ein gegebenenfalls um das Leitungselement umlaufendes Dämpfungskissen in Anlage am Leitungselement ist, wobei dieses Dämpfungskissen zum besseren Halt formschlüssig in einer Vertiefung des Mittelabschnittes sitzen kann. Es besteht aber auch die Möglichkeit, daß zwischen wenigstens eines der Stützteile und dem Leitungselement wenigstens ein gegebenenfalls um das Leitungselement umlaufendes, den Zwischenraum ausfüllendes Dämpfungskissen eingesetzt ist, das ebenfalls wieder formschlüssig in einer Vertiefung des zugeordneten Stützteiles sitzen kann. Solche Dämpfungskissen können in ihrer axialen Erstreckung den Anforderungen angepaßt sein, so daß bei mehreren über den Umfang verteilten Dämpfungskissen diese auch als achsparallele, sich im wesentlichen über die Länge des Leibungselementes erstreckende Streifen ausgebildet sein können. Dabei besteht auch die Möglichkeit, daß . das Dämpfungskissen bzw. die Verdickung des Mittelabschnittes in eine radiale Vertiefung des Leitungselementes eingreift. Schließlich kann vorgesehen sein, daß das Leitungselement von einem Geflechts- oder Gestrickeschlauch zweckmäßig aus Metall umhüllt ist, dessen Enden ggf. an oder mit den Enden des Leitungselementes festgelegt sind.

Allen derartigen Bauformen ist gemeinsam, daß gegenseitige Axialbewegungen der genannten Bauteile bzw. Axialbewegungen des Leitungselementes über die Verdickung bzw. das Dämpfungskissen bzw. den Schlauch zu einer gegenseitigen Reibung führen, durch die mit den Bewegungen einhergehende Schwingungen ausgedämpft und die Bewegung selbst gebremst werden.

In weiterer Ausbildung des Erfindungsgegenstandes kann vorgesehen sein, daß die Stützteile und/oder das Zwischenstück an ihren freien Abschnitten wenigstens eine Durchbrechung aufweisen. Indem die genannten Teile so mit einer mehr oder weniger großen Zahl von vorteilhafterweise gleichmäßig verteilten Öffnungen versehen sind, ergibt sich eine gute Belüftung des das Leitungselement umgebenden Raumes, damit eine gute Wärmeabfuhr und folglich die Verhinderung des Wärmestaus.

Allgemein kann bei jedem der Erfindungsgegenstände vorgesehen sein, daß die den jeweiligen Rohrteilen zugeordneten Enden des Leitungselementes und der Stützteile radial ineinander sitzend angeordnet und auf dem Rohrteil aufgeschoben oder gegen das Ende des Rohrteils gesetzt mit diesem dicht verbunden sind, wobei diese Verbindung in der Regel durch einen schweißenden Arbeitsgang erreicht wird. Das erfindungsgemäße Verbindungselement kann also ein in sich fertig montiertes Bauteil sein, das dann nur noch abschließend mit den Rohrteilen zu verbinden ist.

Dabei kann in mindestens ein Ende des Leitungselementes wenigstens ein Endring eingesetzt sein, um endständig die Wandstärke des Leitungselementes "aufzupolstern" und somit zur Stabilität beizutragen.

Dabei kann dann wenigstens einer der Endringe Bestandteil eines sich über dessen wesentliche Länge in das Leitungselement erstreckenden, gegenüber dem Leitungselement einen radialen Abstand aufweisenden Innenschutzrohres sein, das in an sich bekannter Weise dazu dient, die Strömung innerhalb des Leitungselementes zu glätten und das Leitungselement hinsichtlich Temperaturund Abgasbelastung zu schützen. Um diesen Effekt noch zu erhöhen, kann aber auch vorgesehen sein, daß bei von zwei radial ineinander sitzenden Endringen ausgehenden Innenschutzrohren diese einen gegenseitigen Abstand aufweisen.

Schließlich kann aus gleichem Grunde vorgesehen sein, daß in ein Ende des Leitungselementes das Ende wenigstens eines Drahtgeflechtsschlauches oder wenigstens eines Agraffschlauches eingesetzt ist, und daß dieser Schlauch sich über den wesentlichen Teil der Länge des Leitungselementes erstreckt, sowie gegenüber dem Leitungselement einen radialen Abstand aufweist.

Weitere Merkmale und Einzelheiten der Erfindung ergeben sich aus der nachfolgenden Beschreibung von Ausführungsformen anhand deren zeichnerischer Darstellung. In der Zeichnung zeigen:
- Figur 1: die perspektivische Darstellung einer ersten Ausführungsform des erfindungsgemäßen Verbindungselementes, teilweise aufgeschnitten und
- Figuren 2 bis 5: Abwandlungen der Ausführungsform gemäß Figur 1.

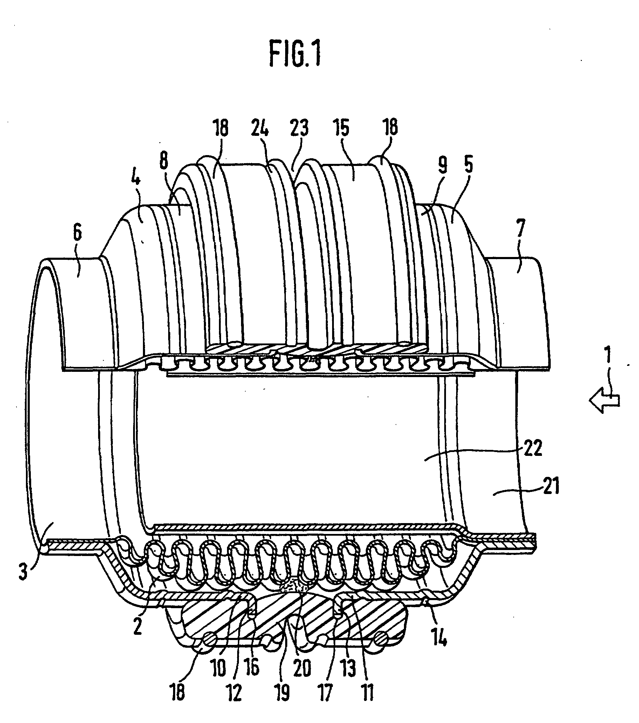

Bei der nachfolgenden Beschreibung der in den Figuren 1 bis 5 dargestellten Ausführungsformen werden wiederkehrende Teile zur Vereinfachung mit gleicher Bezifferung versehen und im wesentlichen nur einmal beschrieben.

Wie aus Figur 1 ersichtlich, weist das in Richtung des Pfeiles 1 durchströmte Verbindungselement einen fluiddichten ringgewellten Metallschlauch 2 mit einstückig angeformten zylindrischen Anschfußenden 3 auf, dessen den Anschlußenden benachbarte Wellen in an sich bekannter Weise erst allmählich auf den endgültigen Außendurchmesser des Metallschlauches 2 ansteigen.

Auf die Anschlußenden 3 des Metallschlauches 2 sind im Querschnitt glockenförmige Stützteile 4, 5 mit ihrem Hals 6, 7 spielfrei aufgesetzt, wobei der achsparallele Mantel 8, 9 der Stützteile 4, 5 gegenüber der Außenkontur des Metallschlauches 2 einen radialen Abstand aufweist. Auf diese Weise kann sich der Metallschlauch 2 innerhalb der Mäntel 8, 9 der Stützteile 4, 5 an sich frei bewegen.

Die aufeinander zu gerichteten Enden 10, 11 der Stützteile 4, 5 haben einen gegenseitigen Axialabstand und sind endständig mit nach radial außen gebogenen Haken bzw. Abbiegungen 12, 13 versehen. Umlaufende Einprägungen 14 dienen der Vergrößerung der Formsteifigkeit der Mäntel 8, 9.

Die Enden der Stützteile 4, 5 sind durch ein insgesamt mit der Ziffer 15 versehenes Zwischenstück aus einem Elastomer, beispielsweise einem Silikonkautschuk miteinander verbunden, das außen an den Mänteln 8, 9 anliegt und in dessen entsprechend ausgebildete Ausnehmungen 16, 17 die Abbiegungen 12, 13 formschlüssig eingreifen. Da das Zwischenstück 15 den Abstand zwischen den Enden 10, 11 der Stützteile 4, 5 im wesentlichen ausfüllt, sind die Stützteile durch das Zwischenstück hinsichtlich beider axialer Bewegungsrichtungen gedämpft federnd gepuffert miteinander verbunden.

Damit sich das Zwischenstück 15 nicht eventuell von den Mänteln 8, 9 abheben und damit lösen kann, sind auf die die Mäntel überdeckenden Abschnitte des Zwischenstückes 15 Federringe 18 aufgesetzt.

Zwischen Mittelteil 19 des Zwischenstückes 15 und Leitungselement 2 ist ein ringförmiges Dämpfungskissen 20 eingesetzt, das zur Sicherung gegen Axialverschiebung zwischen zwei benachbarte Wellenberge des Leitungselementes 2 eingreift. Das Dämpfungskissen 20 kann sich gegenüber dem Mittelteil 19 reibend verschieben, womit insbesondere Axialschwingungen des freien mittleren Bereiches des Leitungselementes 2 gebremst und damit ausgedämpft werden.

Wie ersichtlich, ist das in Figur 1 dargestellte Element zur Verbindung zweier nicht gezeigter Rohrleitungsenden, auf die die Anschlußenden 3 beispielsweise aufgesteckt sind, in der Lage, die Rohrleitungsenden einerseits dicht miteinander zu verbinden, andererseits jedoch gegenseitige Axial- und Lateralbewegungen der Rohrleitungsenden zuzulassen und dabei gleichzeitig die Rohrleitungsenden in schwingungsmäßiger und akustischer Hinsicht voneinander abzukoppeln. Dies ist im wesentlichen der an sich bekannten Ausbildung des Leitungselementes als Ringwellschlauch, andererseits aber der Tatsache zu verdanken, daß die Anschlußenden 3 des Leitungselementes und damit die Enden der weiterführenden Rohrteile über das durch die Stützteile 4, 5 und das Zwischenstück 15 aus einem Elastomer gebildete Stützelement gedämpft federnd aber doch tragend miteinander verbunden sind.

Was das Material des Dämpfungskissens 20 betrifft, so kann hierfür ein Gewebe oder Gestricke aus Metall- und/oder Keramik- und/oder Glasfasern Verwendung finden.

Um das Leitungselement 2 insbesondere temperaturmäßig vor dem hindurchgeleiteten Medium zu schützen und um den Medienstrom zu glätten, ist in das stromauf gelegene Anschlußende 3 des Leitungselementes ein Endring 21 eingesetzt, von dem ein koaxiales Innenschutzrohr 22 ausgeht, das sich über die wesentliche Länge des Leitungselementes 2 erstreckt und diesem gegenüber einen radialen Abstand aufweist.

Wie ersichtlich, ist nun außerdem der Mittelabschnitt 19 des Zwischenstückes 15 mit einer umlaufenden Ausnehmung 23 und daneben mit zwei weiteren, in ihrer radialen Tiefe kleineren Ausnehmungen 24 versehen. Diese dienen dazu, dem genannten Mittelabschnitt hinsichtlich axialer Bewegungsgrößen etwas die Steifheit zu nehmen, ihn also federnder bei Zulassung eines größeren Federweges auszugestalten. Neben der Einstellung der Federeigenschaften des Zwischenstückes über die Wahl dessen Materials ist also durch entsprechende Gestaltung der Ausnehmungen 23, 24 eine individuelle Einstellung der Federeigenschaften des Zwischenstückes 15 möglich.

In nicht dargestellter Weise kann schließlich das Zwischenstück 15 noch mit einem eingelagerten Metalldraht- oder Kunstfasergewebe armiert sein, um seine Belastbarkeit zu erhöhen. Dies gilt auch für die nachfolgend noch beschriebenen Zwischenstücke, so daß es dort-nicht noch einmal erwähnt wird.

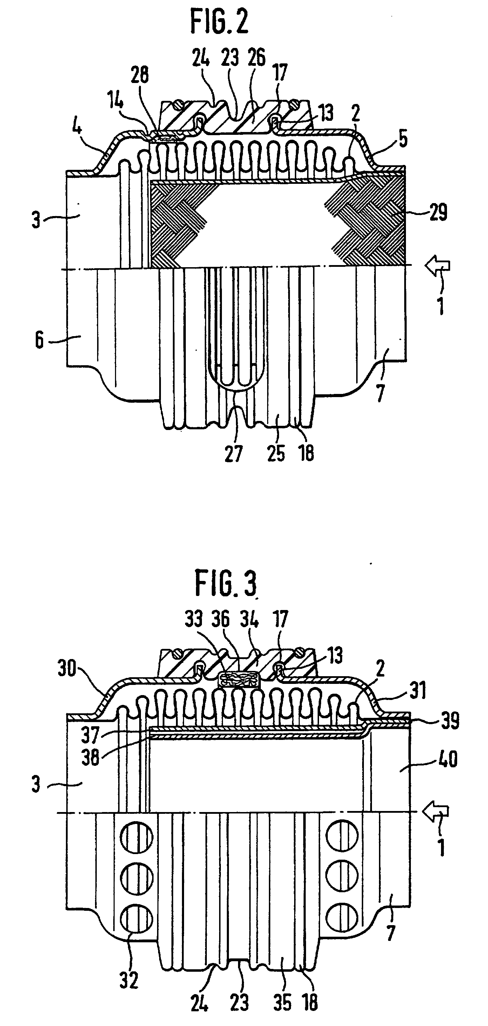

Die in Figur 2 dargestellte Bauform eines Verbindungselementes stimmt im wesentlichen mit der anhand der Figur 1 geschilderten überein, jedoch sind folgende Abänderungen vorgenommen:

Das Zwischenstück 25 weist in seinem Mittelabschnitt 26 über den Umfang gleichmäßig verteilte Durchbrechungen 27 auf, die dazu dienen, den zwischen dem Stützelement 4, 5, 25 und dem Leitungselement 2 gelegenen Raum zu belüften und damit einen Wärmestau in diesem Raum zu vermeiden.

Darüber hinaus ist das umlaufende Dämpfungskissen 28 nunmehr in einem der Stützteile 4, 5, vorliegend im Stützteil 4 angeordnet und an diesem durch die bereits anhand der Figur 1 erwähnten Einprägungen 14 gegen Axialverschiebungen gesichert, so daß es nunmehr das Leitungselement 2 ist, welches gegenüber dem Dämpfungskissen 28 reibend beweglich ist.

Schließlich ist das Innenschutzrohr als Geflechtsschlauch 29 beispielsweise aus einem Drahtgeflecht hergestellt, das mit einer radialen Aufweitung in dem stromauf gelegenen Anschlußende 3 des Leitungselementes 2 sitzt.

Der Gegenstand gemäß Figur 3 weicht von dem gemäß Figur 1 dadurch ab, daß nunmehr die Stützteile 30, 31 mit gleichmäßig über den Umfang verteilten Durchbrechungen 32 ausgestattet sind, die wieder in der bereits anhand der Figur 2 beschriebenen Weise der Belüftung des Raumes außerhalb des Leitungselementes 2 dienen.

Ferner ist bezüglich des Drahtkissens 33 vorgesehen, dieses am Mittelabschnitt 34 des Zwischenstückes 35 zu lagern, indem es dort in einer entsprechend ausgebildeten, umlaufenden Nut 36 sitzt.

Schließlich sind zwei Innenschutzrohre 37, 38 vorgesehen, die von zwei innerhalb des stromauf gelegenen Anschlußendes 3 des Leitungselementes 2 sitzenden Endringen 39, 40 ausgehen und gegenüber dem gewellten Teil des Leitungselementes 2 sowie untereinander einen radialen Abstand aufweisen. Diese Verdoppelung des Innenschutzrohres führt zu einer noch besseren Abkopplung des Leitungselementes 2 gegenüber der durch das hindurchgeleitete Medium gegebenen Wärmebelastung.

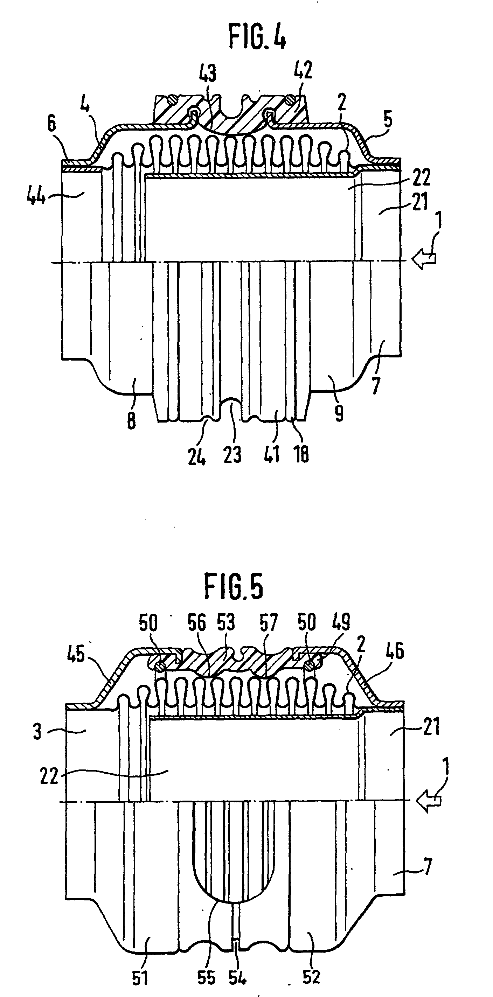

Die Bauform gemäß Figur 4 unterscheidet sich von der gemäß Figur 1 dadurch, daß nunmehr das Mittelteil 41 des Zwischenstückes 42 auf seiner Innenseite eine Verdickung 43 aufweist, mit der es in Anlage an die Außenseite des Leitungselementes 2 ist, so daß Axialbewegungen der Außenkrempen des als ringgewellte Metallschlauch ausgebildeten Leitungselementes 2 unmittelbar durch Reibung an der Verdickung 43 gebremst und damit verdämpft werden. Außerdem ist bei der Bauform gemäß Figur 4 auch in dem stromab gelegenen Anschlußende 3 des Leitungselementes 2 ein Endring 44 angeordnet, so daß sich die in Figur 4 dargestellte Bauform dazu eignet, mit den weiterführenden, nicht dargestellten Leitungsteilen stumpf verbunden, beispielsweise verschweißt zu werden.

Die Bauform gemäß Figur 5 enthält eine Abwandlung dahingehend, daß nunmehr von den Stützteilen 45, 46 an den aufeinander zu gerichteten Enden Abbiegungen 47, 48 nach radial innen ausgehen und daß das Zwischenstücke 49 entsprechend nicht von außen auf die Stützteile sondern von innen in die Stützteile 45, 46 gesetzt ist. Entsprechend sind auch federnde Sprengringe 50 von innen in die Abschnitte des Zwischenstückes 49 gesetzt, die sich entlang der Mäntel 51, 52 der Stützteile 45, 46 erstrecken.

Der Mittelabschnitt 53 des Zwischenstückes 49 ist wieder mit einer umlaufenden Ausnehmung 54 der bereits anhand der Figur 1 beschriebenen Art sowie mit Durchbrechungen 55 der anhand der Figur 2 erwähnten Art versehen und weist im übrigen zwei Verdickungen 56, 57 auf, die in der bereits anhand der Figur 4 beschriebenen Weise auf die Außenseite des Leitungselementes 2 gehen.

## Patentansprüche

1. Fluiddichtes gelenkiges Verbindungselement für Rohrteile, bestehend aus mindestens einem fluiddichten, flexiblen und mit den Rohrteilen dicht verbundenen Leitungselement (2)
sowie einem außerhalb des Leitungselementes (2) diesem gegenüber mit radialem Abstand angeordneten Stützelement, das ein Paar von Stützteilen (4, 5, 30, 31, 45, 46) aufweist,
die mit ihren voneinander fort gerichteten, zylindrischen Enden (6, 7) auf die zylindrischen Enden (3) des Leitungselementes (2) aufgesetzt sind
und deren aufeinander zu gerichtete Enden (10, 11) in Axialrichtung des Leitungselementes (2) beanstandet und flexibel miteinander verbunden sind,
wobei die Verbindung durch ein gegenüber dem Leitungselement (2) radial beanstandetes, im wesentlichen hohlzylindrisches Zwischenstück (15, 25, 35, 42, 49) aus einem Elastomer gebildet ist, das sich mit je einem Abschnitt entlang dem Mantel (8, 9, 51, 52) der Stützteile (4, 5, 30, 31, 45, 46) an diesem anliegend erstreckt, wobei die Abschnitte durch auf- bzw. eingesetzte Spannmittel (18, 50) gegen den Mantel (8, 9, 51, 52) der Stützteile (4, 5, 30, 31, 45, 46) gehalten sind,
**dadurch gekennzeichnet,**
**daß** die aufeinander zu gerichteten Enden (10, 11) der Stützteile (4, 5, 30, 31, 45, 46) mit einer Profilierung in Form einer im wesentlichen radial gerichteten oder im Querschnitt hakenförmigen Abbiegung (12, 13, 47, 48) versehen sind,
**daß** das Zwischenstück (15, 25, 35, 42, 49) mit der Profilierung (12, 13, 47, 48) der Stützteile (4, 5, 30, 31, 45, 46) über die Profilierung (12, 13, 47, 48) formschlüssig umfassende Ausnehmungen (16, 17) in Eingriff ist, und dass den Abschnitten des
Zwischenstückes (15, 25, 35, 42, 49) voneinander getrennte Spannmittel (18, 50) zugeordnet sind.

2. Verbindungselement nach Anspruch 1,
**dadurch gekennzeichnet,**
**daß** die Stützteile (4, 5, 30, 31, 45, 46) als im wesentlichen glockenförmige Rohrstücke ausgebildet sind, die mit ihrem verjüngten Hals (6, 7) wenigstens mittelbar auf dem diesen zugeordneten Rohrteil sitzen.

3. Verbindungselement nach Anspruch 1 oder 2,
**dadurch gekennzeichnet,**
**daß** das Zwischenstück auf die zugeordneten Enden der Stützteile aufgespritzt sind.

4. Verbindungselement nach einem oder mehreren der Ansprüche 1 bis 3,
**dadurch gekennzeichnet,**
**daß** das Zwischenstück (15, 25, 35, 42, 49) als im wesentlichen hohlzylindrischer, die Enden (10, 11) der Stützteile (4, 5, 30, 31, 45, 46) umfassender Ring ausgebildet ist.

5. Verbindungselement nach einem oder mehreren der Ansprüche 1 bis 4,
**dadurch gekennzeichnet,**
**daß** die Spannmittel (18, 50) Federringe, geschlossene Ringe oder Spannbänder sind.

6. Verbindungselement nach einem oder mehreren der Ansprüche 1 bis 5,
**dadurch gekennzeichnet,**
**daß** das Zwischenstück (15, 25, 35, 42, 49) an seinem zwischen den Enden der Stützteile (4, 5, 30, 31, 45, 46) sitzenden Mittelabschnitt (19, 26, 34, 41, 53) wenigstens eine gegebenenfalls um das Leitungselement (2) umlaufende Ausnehmung (23, 24, 54) aufweist.

7. Verbindungselement nach einem oder mehreren der Ansprüche 1 bis 6,
**dadurch gekennzeichnet,**
**daß** das Zwischenstück (15, 25, 35, 42, 49) durch eine eingelagerte gewebeartige Armierung verstärkt ist.

8. Verbindungselement nach Anspruch 7,
**dadurch gekennzeichnet,**
**daß** die Armierung aus einem Metalldraht- oder Kunstfasergewebe besteht.

9. Verbindungselement nach einem oder mehreren der Ansprüche 1 bis 8,
**dadurch gekennzeichnet,**
**daß** der Mittelabschnitt (19, 53) über wenigstens eine gegebenenfalls umlaufende Verdickung (43, 56, 57) in Anlage am Leitungselement (2) ist.

10. Verbindungselement nach einem oder mehreren der Ansprüche 1 bis 9,
**dadurch gekennzeichnet,**
**daß** der Mittelabschnitt (19, 34) über wenigstens ein gegebenenfalls um das Leitungselement (2) umlaufendes Dämpfungskissen (20, 33) in Anlage am Leitungselement (2) ist.

11. Verbindungselement nach Anspruch 10,
**dadurch gekennzeichnet,**
**daß** das Dämpfungskissen (20, 33) formschlüssig in einer Vertiefung des Mittelabschnittes (19, 34) sitzt.

12. Verbindungselement nach einem oder mehreren der Ansprüche 1 bis 11,
**dadurch gekennzeichnet,**
**daß** zwischen wenigstens eines der Stützteile (4) und dem.Leitungselement (2) wenigstens ein gegebenenfalls um das Leitungselement (2) umlaufendes, den Zwischenraum ausfüllendes Dämpfungskissen (28) eingesetzt ist.

13. Verbindungselement nach Anspruch 12,
**dadurch gekennzeichnet,**
**daß** das Dämpfungskissen (28) formschlüssig in einer Vertiefung des zugeordneten Stützteiles (4) sitzt.

14. Verbindungselement nach einem oder mehreren der Ansprüche 1 bis 8,
**dadurch gekennzeichnet,**
**daß** das Leitungselement (2) von einem Geflechts- oder Gestrickeschlauch umhüllt ist, dessen Enden gegebenenfalls an oder mit den Enden des Leitungselementes (2) festgelegt sind.

15. Verbindungselement nach Anspruch 14,
**dadurch gekennzeichnet,**
**daß** der Schlauch wenigstens im wesentlichen aus Metall besteht.

16. Verbindungselement nach einem oder mehreren der Ansprüche 1 bis 15,
**dadurch gekennzeichnet,**
**daß** das Dämpfungskissen (20) bzw. die Verdickung (43, 56, 57) des Mittelabschnittes (53) in eine radiale Vertiefung des Leitungselementes (2) eingreift.

17. Verbindungselement nach einem oder mehreren der Ansprüche 8 bis 16,
**dadurch gekennzeichnet,**
**daß** das Dämpfungskissen (20, 28, 33) aus einem Gewebe oder Gestricke aus Metall- und/oder Keramik- und/oder Glasfaser besteht.

18. Verbindungselement nach einem oder mehreren der Ansprüche 1 bis 17,
**dadurch gekennzeichnet,**
**daß** die Stützteile (30, 31) und/oder das Zwischenstück (25, 53) an ihren freien Abschnitten wenigstens eine Durchbrechung (27, 32, 55, 68) aufweisen.

19. Verbindungselement nach einem oder mehreren der Ansprüche 1 bis 18,
**dadurch gekennzeichnet,**
**daß** die den jeweiligen Rohrteilen zugeordneten Enden (3, 6, 7) des Leitungselementes (2) und der Stützteile (4, 5, 30, 31, 45, 46) radial ineinander sitzend angeordnet und auf dem Rohrteil aufgeschoben oder gegen das Ende des Rohrteiles gesetzt und mit diesem dicht verbunden sind.

20. Verbindungselement nach einem oder mehreren der Ansprüche 1 bis 19,
**dadurch gekennzeichnet,**
**daß** in mindestens ein Ende (3) des Leitungselementes (2) wenigstens ein Endring (21, 39, 40, 44) eingesetzt ist.

21. Verbindungselement nach Anspruch 20,
**dadurch gekennzeichnet,**
**daß** wenigstens einer der Endringe (21, 39, 40) Bestandteil eines sich über dessen wesentliche Länge in das Leitungselement (2) erstreckenden, gegenüber dem Leitungselement (2) einen radialen Abstand aufweisenden Innenschutzrohres (20, 37, 38) ist.

22. Verbindungselement nach Anspruch 21,
**dadurch gekennzeichnet,**
**daß** bei von zwei radial ineinander sitzenden Endringen (39, 40) ausgehenden Innenschutzrohren (37, 38) diese einen gegenseitigen radialen Abstand aufweisen.

23. Verbindungselement nach einem oder mehreren der Ansprüche 1 bis 22,
**dadurch gekennzeichnet,**
**daß** in ein Ende (3) des Leitungselementes (2) das Ende wenigstens eines Drahtgeflechtsschlauches (29) oder Agraffschlauches eingesetzt ist, und daß dieser Schlauch sich über den wesentlichen Teil des Leitungselementes (2) erstreckt sowie gegenüber dem Leitungselement (2) einen radialen Abstand aufweist.

## Claims

1. Fluid-tight articulated connecting element for pipe components, consisting of at least one fluid-tight, flexible duct element (2) tightly connected to the pipe components,
and a support element which is arranged outside the duct element (2) and is spaced apart radially therefrom, which support element has a pair of support members (4, 5, 30, 31, 45, 46),
which are mounted by their cylindrical ends (6, 7) that face away from one another on the cylindrical ends (3) of the duct element (2),
and the ends (10, 11) of which that face one another are flexibly connected to one another and are spaced apart from one another in the axial direction of the duct element (2),
the connection being formed by a substantially hollow-cylindrical intermediate piece (15, 25, 35, 42, 49) made of an elastomer, which is spaced apart radially from the duct element (2) and a portion of which rests against and extends along the outer wall (8, 9, 51, 52) of each of the support members (4, 5, 30, 31, 45, 46), the portions being held against the outer wall (8, 9, 51, 52) of the support members (4, 5, 30, 31, 45, 46) by means of mounted or inserted tensioning means (18, 50),
**characterised in that**
the ends (10, 11) of the support members (4, 5, 30, 31, 45, 46) that face one another are provided with a shaped element in the form of a bent-over portion (12, 13, 47, 48) which is substantially radially directed or is hook-shaped in cross-section;
the intermediate piece (15, 25, 35, 42, 49) is in engagement with the shaped element (12, 13, 47, 48) of the support members (4, 5, 30, 31, 45, 46) by way of recesses (16, 17) that engage interlockingly around the shaped element (12, 13, 47, 48); and the portions of the intermediate piece (15, 25, 35, 42, 49) are assigned separate tensioning means (18, 50).

2. Connecting element according to claim 1,
**characterised in that**
the support members (4, 5, 30, 31, 45, 46) are in the form of substantially bell-shaped pipe pieces which are seated by their tapering neck (6, 7) at least indirectly on the associated pipe component.

3. Connecting element according to claim 1 or 2,
**characterised in that**
the intermediate piece is injection-moulded onto the associated ends of the support members.

4. Connecting element according to one or more of claims 1 to 3,
**characterised in that**
the intermediate piece (15, 25, 35, 42, 49) is in the form of a substantially hollow-cylindrical ring encompassing the ends (10, 11) of the support members (4, 5, 30, 31, 45, 46).

5. Connecting element according to one or more of claims 1 to 4,
**characterised in that**
the tensioning means (18, 50) are spring rings, closed rings or tensioning bands.

6. Connecting element according to one or more of claims 1 to 5,
**characterised in that**
the intermediate piece (15, 25, 35, 42, 49) has in its central portion (19, 26, 34, 41, 53) seated between the ends of the support members (4, 5, 30, 31, 45, 46) at least one recess (23, 24, 54) which may extend around the periphery of the duct element (2).

7. Connecting element according to one or more of claims 1 to 6,
**characterised in that**
the intermediate piece (15, 25, 35, 42, 49) is strengthened by an inserted fabric-like reinforcement.

8. Connecting element according to claim 7,
**characterised in that**
the reinforcement consists of a fabric made of metal wire or plastics fibres.

9. Connecting element according to one or more of claims 1 to 8,
**characterised in that**
the central portion (19, 53) is in contact with the duct element (2) by way of at least one thickened portion (43, 56, 57) which may extend around the periphery.

10. Connecting element according to one or more of claims 1 to 9,
**characterised in that**
the central portion (19, 34) is in contact with the duct element (2) by way of at least one damping cushion (20, 33) which may extend around the periphery of the duct element (2).

11. Connecting element according to claim 10,
**characterised in that**
the damping cushion (20, 33) is seated interlockingly in a depression in the central portion (19, 34).

12. Connecting element according to one or more of claims 1 to 11,
**characterised in that**
between at least one of the support members (4) and the duct element (2) there is inserted at least one damping cushion (28) which may extend around the periphery of the duct element (2) and fills up the intermediate space.

13. Connecting element according to claim 12,
**characterised in that**
the damping cushion (28) is seated interlockingly in a depression in the associated support member (4).

14. Connecting element according to one or more of claims 1 to 8,
**characterised in that**
the duct element (2) is covered by a woven or knitted flexible tube, the ends of which may be fixed to or with the ends of the duct element (2).

15. Connecting element according to claim 14,
**characterised in that**
the flexible tube consists at least substantially of metal.

16. Connecting element according to one or more of claims 1 to 15,
**characterised in that**
the damping cushion (20) or the thickened portion (43, 56, 57) of the central portion (53) engages in a radial depression in the duct element (2).

17. Connecting element according to one or more of claims 8 to 16,
**characterised in that**
the damping cushion (20, 28, 33) consists of a woven fabric or knitted fabric of metal fibres and/or ceramics fibres and/or glass fibres.

18. Connecting element according to one or more of claims 1 to 17,
**characterised in that**
the support elements (30, 31) and/or the intermediate piece (25, 53) have or has in its free portions at least one opening (27, 32, 55, 68).

19. Connecting element according to one or more of claims 1 to 18,
**characterised in that**
the ends (3, 6, 7) of the duct element (2) and of the support members (4, 5, 30, 31, 45, 46) associated with the respective pipe components are arranged seated radially one inside the other and are pushed onto the pipe component or seated towards the end of the pipe component and tightly connected thereto.

20. Connecting element according to one or more of claims 1 to 19,
**characterised in that**
at least one end ring (21, 39, 40, 44) is inserted in at least one end (3) of the duct element (2).

21. Connecting element according to claim 20,
**characterised in that**
at least one of the end rings (21, 39, 40) is a component of an internal protective pipe (22, 37, 38) which extends into the duct element (2) over a substantial portion of its length and is spaced apart radially from the duct element (2).

22. Connecting element according to claim 21,
**characterised in that**
when internal protective pipes (37, 38) extend from two end rings (39, 40) seated radially one inside the other, the protective pipes (37, 38) are spaced apart radially from one another.

23. Connecting element according to one or more of claims 1 to 22,
**characterised in that**
the end of at least one flexible woven wire tube (29) or interlinked helically wound flexible tube is inserted in one end (3) of the duct element (2); and that flexible tube extends over a substantial portion of the duct element (2) and is spaced apart radially from the duct element (2).

## Revendications

1. Elément de raccord articulé étanche aux fluides pour des éléments tubulaires, constitué d'au moins un élément de conduite (2) étanche aux fluides, flexible, et raccordé de manière étanche aux éléments tubulaires,
ainsi que d'un élément support, disposé hors de l'élément de conduite (2) à distance radiale par rapport à celui-ci, qui présente une paire de pièces d'appui (4, 5, 30, 31, 45, 46),
qui, avec leurs extrémités (6, 7) cylindriques détournées l'une de l'autre, sont posées sur les extrémités (3) cylindriques de l'élément de conduite (2),
et dont les extrémités (10, 11) dirigées l'une vers l'autre en sens axial de l'élément de conduite (2) sont à distance l'une de l'autre et raccordées entre elles de manière flexible,
le raccord étant formé par une pièce intermédiaire (15, 25, 35, 42, 49) à distance radiale par rapport à l'élément de conduite (2), essentiellement cylindrique creuse, en élastomère qui s'étend chacun avec une section le long de l'enveloppe (8, 9, 51, 52) des pièces d'appui (4, 5, 30, 31, 45, 46) en étant adjacent à celle-ci, les sections étant maintenues contre l'enveloppe (8, 9, 51, 52) des pièces d'appui (4, 5, 30, 31, 45, 46) par des moyens de serrage (18, 50) superposés ou insérés,
**caractérisé**
**en ce que** les extrémités (10, 11), dirigées les unes vers les autres, des pièces d'appui (4, 5, 30, 31, 45, 46) sont munies d'un profilage en forme d'une courbure (12, 13, 47, 48) essentiellement dirigée radialement ou de section en forme de crochet,
**en ce que** la pièce intermédiaire (15, 25, 35, 42, 49) est en prise avec le profilage (12, 13, 47, 48) des pièces d'appui (4, 5, 30, 31, 45, 46) par conjonction de forme avec les évidements (16, 17) coiffant le profilage (12, 13, 47, 48), et
**en ce que** des moyens de serrage (18, 50) séparés l'un de l'autre sont attribués aux sections de la pièce intermédiaire (15, 25, 35, 42, 49).

2. Elément de raccord selon la revendication 1, **caractérisé en ce que** les pièces d'appui (4, 5, 30, 31, 45, 46) sont formées essentiellement comme des éléments tubulaires en forme de cloche, qui avec leur col (6, 7) rétréci se trouvent au moins indirectement sur l'élément tubulaire qui leur est attribué.

3. Elément de raccord selon la revendication 1 ou 2, **caractérisé en ce que** la pièce intermédiaire est appliquée au pistolet sur les extrémités attribuées des pièces d'appui.

4. Elément de raccord selon l'une ou plusieurs des revendications 1 à 3, **caractérisé en ce que** la pièce intermédiaire (15, 25, 35, 42, 49) est formée essentiellement comme un anneau creux cylindrique entourant les extrémités (10, 11) des pièces d'appui (4, 5, 30, 31, 45, 46).

5. Elément de raccord selon l'une ou plusieurs des revendications 1 à 4, **caractérisé en ce que** les moyens de serrage (18, 50) sont des rondelles ressort, des anneaux fermés ou des bandes de serrage.

6. Elément de raccord selon l'une ou plusieurs des revendications 1 à 5, **caractérisé en ce que** la pièce intermédiaire (15, 25, 35, 42, 49) présente, sur sa section médiane (19, 26, 34, 41, 53) située entre les extrémités des pièces d'appui (4, 5, 30, 31, 45, 46), au moins un évidement (23, 24, 54) entourant éventuellement l'élément de conduite (2).

7. Elément de raccord selon l'une ou plusieurs des revendications 1 à 6, **caractérisé en ce que** la pièce intermédiaire (15, 25, 35, 42, 49) est renforcée par une armature intercalée en forme de tissu.

8. Elément de raccord selon la revendication 7, **caractérisé en ce que** l'armature est constituée d'un tissu en fil métallique ou en fibres artificielles.

9. Elément de raccord selon l'une ou plusieurs des revendications 1 à 8, **caractérisé en ce que** la section médiane (19, 53) prend appui sur l'élément de conduite (2) à l'aide d'au moins un épaississement (43, 56, 57) éventuellement périphérique.

10. Elément de raccord selon l'une ou plusieurs des revendications 1 à 9, **caractérisé en ce que** la section médiane (19, 34) prend appui sur l'élément de conduite (2) à l'aide d'au moins un coussin amortisseur (20, 33) entourant éventuellement l'élément de conduite (2).

11. Elément de raccord selon la revendication 10, **caractérisé en ce que** le coussin amortisseur (20, 33) est disposé par conjonction de forme dans une cavité de la section médiane (19, 34).

12. Elément de raccord selon l'une ou plusieurs des revendications 1 à 11, **caractérisé en ce qu'**au moins un coussin amortisseur (28) remplissant l'espace intermédiaire et entourant éventuellement l'élément de conduite (2), est inséré entre au moins l'une des pièces d'appui (4) et l'élément de conduite (2).

13. Elément de raccord selon la revendication 12, **caractérisé en ce que** le coussin amortisseur (28) est disposé par conjonction de forme dans une cavité de la pièce d'appui (4) attribuée.

14. Elément de raccord selon l'une ou plusieurs des revendications 1 à 8, **caractérisé en ce que** l'élément de conduite (2) est entouré par une gaine tressée ou tricotée, dont les extrémités sont fixées éventuellement sur ou avec les extrémités de l'élément de conduite (2).

15. Elément de raccord selon la revendication 14, **caractérisé en ce que** la gaine est composée au moins essentiellement de métal.

16. Elément de raccord selon l'une ou plusieurs des revendications 1 à 15, **caractérisé en ce que** le coussin amortisseur (20) ou l'épaississement (43, 56, 57) de la section médiane (53) a prise dans une cavité radiale de l'élément de conduite (2).

17. Elément de raccord selon l'une ou plusieurs des revendications 8 à 16, **caractérisé en ce que** le coussin amortisseur (20, 28, 33) est composé d'un tissu ou d'un tricot en fibres métalliques et/ou céramiques et/ou de verre.

18. Elément de raccord selon l'une ou plusieurs des revendications 1 à 17, **caractérisé en ce que** les pièces d'appui (30, 31) et/ou la pièce intermédiaire (25, 53) présentent au moins une brèche (27, 32, 55, 68) sur leurs sections libres.

19. Elément de raccord selon l'une ou plusieurs des revendications 1 à 18, **caractérisé en ce que** les extrémités (3, 6, 7), attribuées aux éléments tubulaires respectifs, de l'élément de conduite (2) et des pièces d'appui (4, 5, 30, 31, 45, 46) sont disposées radialement les unes dans les autres et poussées sur l'élément tubulaire ou posées contre l'extrémité de l'élément tubulaire et raccordées à celui-ci de manière étanche.

20. Elément de raccord selon l'une ou plusieurs des revendications 1 à 19, **caractérisé en ce qu'**au moins un anneau terminal (21, 39, 40, 44) est inséré dans au moins une extrémité (3) de l'élément de conduite (2).

21. Elément de raccord selon la revendication 20, **caractérisé en ce qu'**au moins l'un des anneaux terminaux (21, 39, 40) fait partie d'un tube de protection intérieur (22, 37, 38) présentant un écartement radial par rapport à l'élément de conduite (2) et s'étendant dans l'élément de conduite (2) sur la longueur principale de ce tube de protection intérieur.

22. Elément de raccord selon la revendication 21, **caractérisé en ce que**, lorsque des tubes de protection intérieurs (37, 38) partent de deux anneaux terminaux (39, 40) insérés l'un dans l'autre de manière radiale, ceux-ci présentent un écartement radiale réciproque.

23. Elément de raccord selon l'une ou plusieurs des revendications 1 à 22, **caractérisé en ce que** l'extrémité d'au moins un tuyau en fil métallique (29) ou d'un tuyau d'agrafe est insérée dans une extrémité (3) de l'élément de conduite (2), et **en ce que** ce tuyau s'étend sur la plus grande partie de l'élément de conduite (2) et qu'il présente un écartement radial par rapport à l'élément de conduite (2).
